# EUROPEAN PATENT APPLICATION

(11) **EP 2 545 820 A1**
(43) Date of publication of application: **16.01.2013**
(21) Application number: 11173603.9
(22) Date of filing: 12.07.2011
(51) Int. Cl.: A47J 27/21

(54) **Washable electric kitchen appliance**

(71) Applicant: Koninklijke Philips Electronics N.V., 5621 BA Eindhoven (NL)
(72) Inventor: Slot, Arjan, 5600 AE Eindhoven (NL); Bos, Herman, 5600 AE Eindhoven (NL); Van Der Woning, Mark, 5600 AE Eindhoven (NL)
(74) Representative: Damen, Daniel Martijn

(57) **Abstract**

Electric appliance (1) including a washable part (20) comprising: a wall (22, 32, 30) that defines a sealed electronics compartment (34); electronics (38, 40) disposed inside said compartment; a valve (44), including: a valve housing (46) incorporated in said wall (32) and defining a valve passage (48) from an interior (36) of the electronics compartment (34) to an exterior (58) of the electronics compartment, and a valve member (52) that is at least partly movably arranged inside the valve housing (46) such that it is displaceable between a first position in which the valve passage (48) is substantially closed off, and a second position in which the valve passage is substantially open. The valve member (52) is configured to move into the first position through water-induced action when the valve is inserted in water, and to move into the second position when the valve is removed from said water.

## Description

### FIELD OF THE INVENTION

The present invention relates to an electric kitchen appliance that can be washed safely, in particular a liquid heating appliance such as a kettle, hot water jug or stand-alone milk frother.

### BACKGROUND

Electric kitchen appliances, especially those intended for processing liquid foodstuff, may naturally come into contact with liquids, either during processing of the food or afterwards when the appliance is cleaned with water. The exposure to liquids may easily lead to the ingress of moisture into the appliance, which may affect the proper operation of the electric parts thereof. One approach to ensuring the appliance's proper and safe operation entails sealing its electric parts in a waferproof electronics compartment. However, it turns out to be extremely difficult to warrant the watertightness of the compartment over the life span of the appliance, at least when economically viable sealing constructions are employed. Furthermore, an imperfectly waterproofed electronics compartment presents the danger that moisture may ingress without being able to escape again. As a result, the moisture may accumulate inside the compartment over time to eventually cause malfunction of the electronics, even when the electric parts are designed to withstand a certain level of moist exposure.

In order to both prevent water from penetrating into an electric appliance and allow water that nevertheless penetrated into the appliance to drain therefrom, patent application GB 2,441,628 (Fumagalli) suggests to put a valve means in a base of a washable part of the appliance. The valve means is arranged such that it is opened by placing the washable part on a support surface or on a further appliance part, and such that it is closed when the appliance is lifted/removed therefrom for cleaning.

GB'628 essentially discloses two alternative valve means embodiments. In a first embodiment, the valve means comprise a spring biased member that selectively opens and closes an opening in the base of the washable part and that partly projects through that opening. Accordingly, when the washable part is placed down on a surface or against another part of the appliance, the member is pushed up against the spring bias to open the valve means. Water trapped in the appliance is thus given an opportunity to drain out as soon as the washable part is placed down after cleaning. In a second embodiment, the spring biased member may be recessed in the base and be arranged to be opened by a suitable spigot part on another part of the appliance, e.g. on a power base, which spigot part contacts the member when the washable part is positioned on the appliance for use and not, for example, on a kitchen work surface.

The embodiments disclosed by GB'628 have a number of drawbacks. One drawback of the first embodiment, for example, may manifest itself when the base of the washable part got dirty during use, and a user immerses the base in water to clean it. In doing so, he may unintentionally force the base of the washable part against a bottom or side wall of a partly water-filled dishpan, which may cause the respective wall to push back the valve member against the spring bias to open the valve means. This may then lead to the rapid inflow of water. The same may happen when the force exerted by the water on the immersed valve member overcomes the spring force to open the valve. A drawback associated with the second embodiment is that it requires a two-part appliance: apart from the washable part there must be a spigot-providing part to open the valve. Although a two-part design is common in cordless appliances, not all appliances belong to this category. In addition, the valve is opened only when the washable part is actually placed on the spigot-providing part; time the washable part spends off the spigot-providing part remains unused for drying the inside of the appliance. Another drawback common to both embodiments is that the valve means consists of at least three parts, namely a movable valve member, a resilient biasing means (e.g. a spring), and a valve housing that defines the passage to be opened and closed by the valve member and that provides for a connection point of the biasing member.

### SUMMARY OF THE INVENTION

It is an object of the present invention to provide for an electric appliance that overcomes or mitigates one or more of the above-mentioned drawbacks associated with appliances known in the art.

A first aspect of the invention is directed to an electric kitchen appliance that includes a washable part. The washable part includes at least one wall that defines a generally sealed electronics compartment, and electronics, e.g. a power supply or a printed circuit board, disposed inside said electronics compartment. The washable part further includes a valve. The valve includes a valve housing that is incorporated in said at least one wall and that defines a valve passage extending from an exterior of the electronics compartment to an interior of the electronics compartment, and a valve member that is at least partly movably arranged inside the valve housing such that it is displaceable between a first position in which the valve passage is substantially closed off, and a second position in which the valve passage is substantially open. The valve member is configured such that it moves into the first position through water-induced action when the valve is inserted in water, and such that it moves into the second position when the valve is removed from said water.

The disclosed kitchen appliance includes a washable part with an electronics compartment sealed by a valve that is opened and closed *not* in dependence of whether it is placed on a support surface or against a further appliance part (as is the case in GB'628), but instead exclusively in dependence of its insertion in or exposure to in particular liquid water. Accordingly, the valve closes when submerged in a water-filled dishpan, irrespective of whether it is pressed against a wall thereof. For the same reason the valve may be applied in one-part (typically corded) and two-part (typically cordless) appliances alike: the presence of a further appliance part in the form of a power base, for example, is immaterial to the state of the valve.

In one embodiment of the kitchen appliance the at least one wall of the electronics compartment defines a bottom wall of said compartment, while the valve is incorporated in said bottom wall. In such an embodiment, the 'bottom wall' is defined with respect to a normal use orientation of the washable part, in which orientation it is configured to be placed onto a generally horizontal worktop or further appliance part so as to be operated.

Providing the valve in the bottom wall of the electronics compartment enables gravity to efficiently drain liquid water that has accumulated in the compartment via the valve passage, which is open when drainage is possible.

The valve member of the valve may be constructed in different ways to ensure that it properly responds to insertion in water.

In one embodiment, use may be made of a deformable, water-absorbing valve member that is configured to expand when inserted into water. The valve member may be disposed, e.g. caged, inside the valve passage, and be dimensioned such that (i) in a dry state, it is sufficiently small not to completely block the valve passage, and (ii) in a wet expanded state, its outer surface(s) have moved into sealing contact with the wall(s) of the valve passage so as to close it off. Materials from which such a water-absorbing valve member may be made include absorbing polymers, e.g. (sodium) polyacrylate. A disadvantage of this type of valve construction is that it may take a significant amount of time for the water absorbing valve member to evaporate its water content once is has been withdrawn from the water. Hence, it may remain in its expanded state for a rather long time afterwards, disallowing drainage of water from the electronics compartment via the valve passage.

To overcome this problem, an alternative and preferred embodiment of the kitchen appliance makes use of a valve member including a buoyant body that is movably arranged inside the valve housing. The valve may preferably be configured such that the buoyant body, upon insertion of the valve into water, will float on said water so as to occupy its first valve-passage-blocking position, and such that the buoyant body, upon emergence of the valve from the water, will be forced back to its second valve-passage-clearing position by gravity, at least when the appliance is held in its normal use orientation.

Since the buoyant body may preferably be adapted not to absorb water nor to deform upon such water absorption, it does not have to lose this water by the relatively slow process of evaporation. Instead, it may switch between the first and second position instantly when inserted into or removed from water, respectively. The valve may thus react quickly to changing conditions. An additional advantage relative to the valve disclosed in GB'628 is that the valve may have a structurally simple and economic design, comprising no more than two parts (e.g. a valve housing and a movable member); an elastic element that biases the valve member towards the closed position of the valve may thus be dispensed with.

In some embodiments of the kitchen appliance, the at least one wall of the electronics compartment, and more particularly the bottom wall defined thereby, may be arranged to direct (liquid) water towards the valve passage. This may, for example, be accomplished by having the wall define a sloping water collecting surface, or a plurality of water channels/grooves, that lead to a lowest point coinciding with the valve passage.

Water may, however, also be trapped in pockets between electronic components provided in the electronics compartment and/or other places that do not properly drain into the valve passage. To ensure that water is also removed from these locations, an elaboration of the presently disclosed kitchen appliance provides that the at least one wall of the electronics compartment further defines an upper wall that, in the normal use orientation of the washable part, is disposed higher than the bottom wall. The upper wall includes a venting passage defining at least a portion of a path from the exterior of the electronics compartment to the interior electronics compartment space. ― It is noted for clarity that the term 'upper wall' does not necessarily refer to a top wall of the electronics compartment that is disposed above the bottom wall. Instead, it is to be construed as an wall portion of the electronics compartment that, in the normal use orientation of the washable part, is located at a higher vertical position/greater vertical coordinate.

While the valve passage alone may drain water in its liquid state from the electronics compartment at any time the valve passage is open (i.e. both when the appliance is in or out of operation), the combination of the valve passage and the venting passage cooperate to discharge vaporized water, primarily during operation of the appliance. During operation the electronics in the electronics compartment generate and dissipate heat. This will raise the temperature of the air inside the electronics compartment and at the same time cause the evaporation of water trapped therein. To discharge the evaporated water, the (lower) valve passage and the (higher) venting passage together mimic the ends of a chimney that allows the warm and rising moist air to be released via the venting passage, and that simultaneously enables relatively cold, dry air to be drawn in from the environment via the valve passage to sustain the circulation.

To prevent the ingress of water into the electronics compartment via the venting passage, in particular during cleaning of the appliance, the appliance may preferably include a semi-permeable seal that is disposed in the path from the exterior of the electronics compartment to the interior electronics compartment space. The semi-permeable seal may be configured to prevent or obstructs the exchange of liquid water while allowing the exchange of moist air via said path.

In one embodiment of the appliance, the semi-permeable seal may be provided for in the form of a semi-permeable membrane. Such membranes are known in the art, but may typically be relative expensive and fragile. In a preferred embodiment of the appliance, the semi-permeable seal may alternatively be an economically manufacturable and durable labyrinth seal that provides for a narrow, tortuous part of the aforementioned path.

It should be clear from the above that the ingress of a little water into the electronics compartment will normally neither harm the appliance nor cause a safety risk to its user. It is in particular the ingress of large amounts of water and/or the accumulation of water over time that may be detrimental. The valve and/or the labyrinth seal may therefore preferably be designed such that the rapid inflow of large amounts of water into the electronics compartment during cleaning is prevented. To this end, the valve and/or the labyrinth seal may be constructed such that they have a leakage rate of no more than 5 grams of water per 10 seconds of immersion in water, and preferably no more than 4 grams of water per 10 seconds of immersion.

The cooperation between the valve passage and the venting passage in circulating air through the electronics compartment during operation of the appliance depends on the generation of heat inside the electronics compartment space. The invention is therefore particularly suitable for electronic kitchen appliances wherein the electronics comprise an electric heating element, e.g. a resistive heater. Such a heating element, preferably with a significant heat generating power of at least 0.25 kW, is typically found in liquid heating kitchen appliances, such as for instance kettles, hot water jugs, and stand-alone milk frothers.

These and other features and advantages of the invention will be more fully understood from the following detailed description of certain embodiments of the invention, taken together with the accompanying drawings, which are meant to illustrate and not to limit the invention.

### BRIEF DESCRIPTION OF THE DRAWINGS

Fig. 1 is a schematic perspective view of an exemplary electric kitchen appliance according to the present invention, comprising a cordless washable part and a corded further part;
Fig. 2 is a schematic cross-sectional side view of the washable part of the appliance shown in Fig. 1, illustrating in particular a bottom wall of the washable part that incorporates a valve; and
Fig. 3 shows two cross-sectional side views of the valve included in the bottom wall of the washable part shown in Figs. 1 and 2, wherein the left view illustrates the valve in an open position, and wherein the right view illustrates the valve in a closed position.

### DETAILED DESCRIPTION

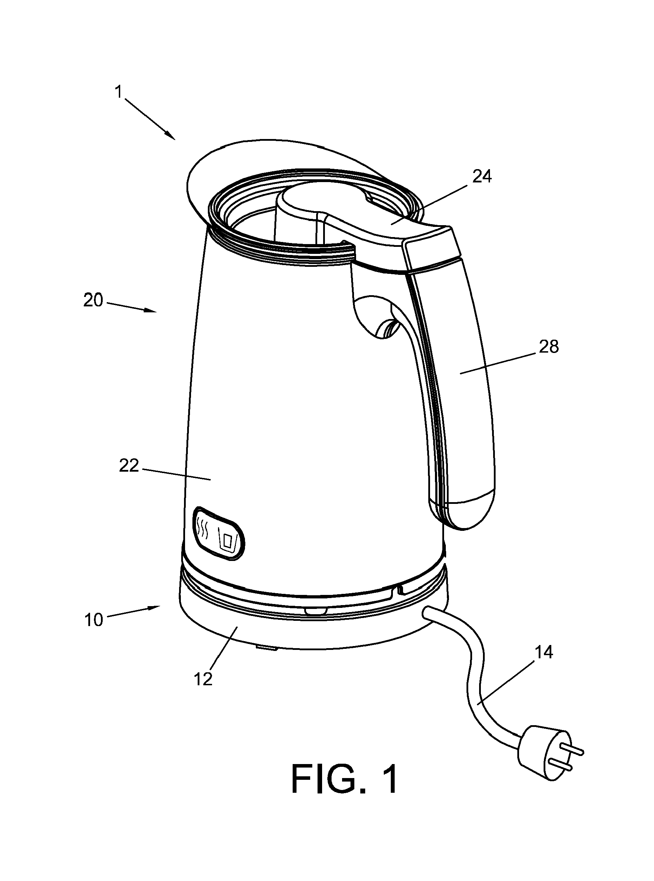

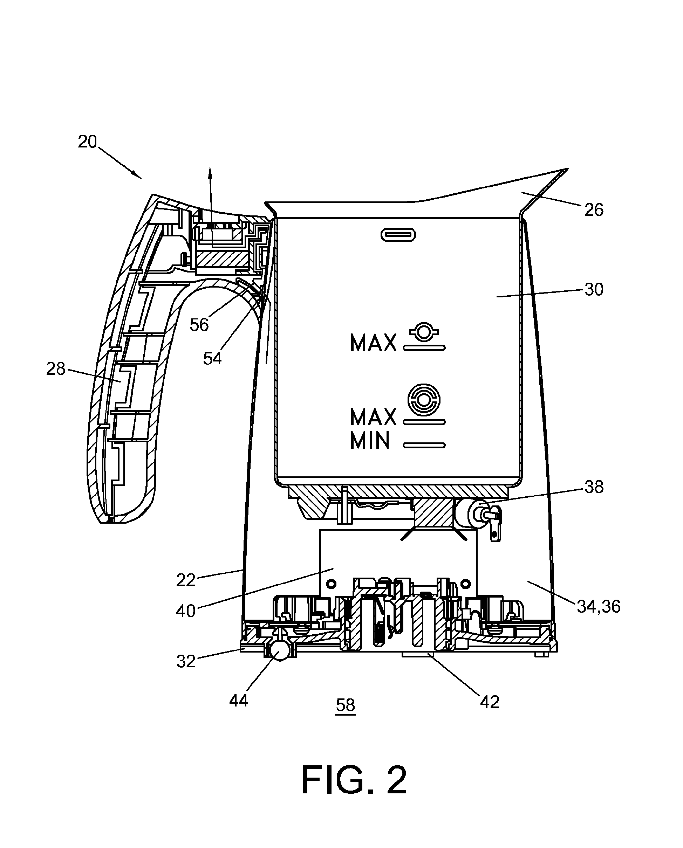

Fig. 1 is a schematic perspective view of an exemplary electric kitchen appliance 1 according to the present invention, more in particular a hot water kettle. The appliance 1 may comprise a cordless washable part 20 in the form of a jug, which is detachable connectable to a corded further part 10 in the form of a power base 12. During operation, the washable part 10 may be placed on the power base 12 of the further part 10 such that the two parts 10, 20 are electrically connected via a connector 42 (the washable part's portion of the connector is shown in Fig. 2). The power base 12 may in turn be connected to the mains via a power cord 14, such that the power base 12 and any electronics accommodated by the washable part 10 can be electrically powered.

Fig. 2 schematically shows the washable part 20 of the kitchen appliance 1 in a cross-sectional side view. The washable part 20 may include a substantially tubular or jacket-shaped side wall 22, an outside of which may be fitted with a handle 28 to facilitate manual handling. An inner jug 30, including a spout 26 to facilitate pouring out a liquid held therein, may be partly inserted into an upper opening defined by the tubular side wall 22 such that said upper opening is substantially sealed off. An opposite lower opening defined by the tubular side wall 22 may be substantially closed off by a bottom plate or sub-base 32. Together, the side wall 22, the inner jug 30 and the bottom plate 32 may form a wall that defines a generally sealed electronics compartment 34 comprising an interior electronics compartment space 36. It is noted that the term 'generally sealed compartment' as used in this text intends to refer to a compartment whose defining wall does not include any openings, other than the valve passage 48 and the venting passage 54 to be described hereafter, designed to facilitate the free exchange of fluids between the interior 36 and the exterior 58 of the electronics compartment 34.

The electronics compartment 34 may accommodate electronics in the form of one or more electric components. In the depicted embodiment of the appliance 1, the electronics compartment 34 houses, inter alia, an electrically resistive heater 38, a printed circuit board (PCB) 40, and an inner portion of an electrical power connector 42. The PCB 40 may comprise a thermostatic control unit to control the operation of the heater 38, and may be electrically connected thereto. Electrical power may be supplied from the power base 12 to the PCB 40 and the heater 38 via the electrical power connector 42. The power connector 42 may be a 360° connector, one portion of which may be sealingly integrated into a center portion of the bottom plate 32 and configured to make electric contact with a mating connector portion provided on a upper center portion of the power base 12 when the washable part 20 is placed on top thereof, as shown in Fig. 1.

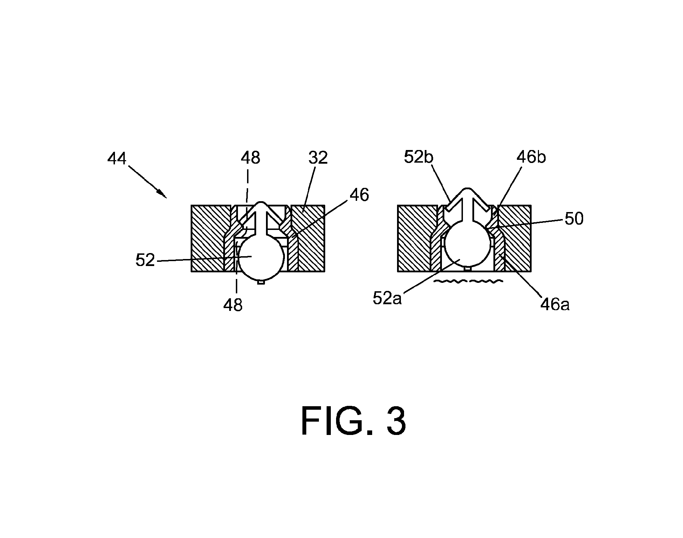

To allow for the drainage of liquid water that has accumulated in the electronics compartment 34, the bottom plate 32 may be provided with a valve 44. The valve 44 included in the exemplary embodiment of Figs.1-2 is shown in more detail in the cross-sectional side views of Fig. 3, wherein the left view illustrates the valve 44 in an open position, and wherein the right view illustrates the valve 44 in a closed position.

The valve 44 may include a substantially tubular valve housing 46 defining an elongate valve passage 48 that extends from the interior 36 of the electronics compartment 34 to the exterior environment 58 of the washable part 20. The valve housing 46 may comprise a first (lower) axial portion 46a and a second (upper) axial portion 46b, and the transition between the first and second axial portions 46a, 46b may be marked by a continuous tangential or circumferential constriction 50, i.e. an axial valve passage portion with a smaller inner diameter than that of the adjacent first and second axial portions 46a, 46b.

The valve 44 may further include a valve member 52, at least a part of which is moveably arranged inside the valve housing 46 such that it is displaceable between a first position in which the valve passage 48 is substantially closed off, and a second position in which the valve passage 48 is substantially open. To this end the valve member 52 may include a buoyant body 52a in the form of a hollow ball. The valve member 52 may further include an anchor 52b in the form of an arrow, having an arrow stem with a pointed arrowhead connected thereto, that is attached to an outer surface of, and points away from a center of, the buoyant body 52a. The buoyant body 52a may have an outer diameter that is smaller than the inner diameter of the first axial portion 46a of the valve passage 48, and larger than the inner diameter of the constriction 50. Similarly, the arrowhead of the anchor 52b may have an outer diameter that is smaller than the inner diameter of the second axial portion 46b of the valve passage 48, and larger than the inner diameter of the constriction 50. The inner diameter of the first axial portion 46a may be smaller than the inner diameter of the second axial portion 46b, as shown, but this need not be the case. Upon assembly of the valve 44, the valve member 52 may be pushed into the valve passage 48, anchor first. When the arrowhead of the anchor 52b encounters the constriction 50, it may flex slightly inwards to pass through it, and subsequently snap back into its wide configuration to prevent withdrawal of valve member 52 from the valve housing 46.

When the appliance 1 is in operation the valve 44 is out of the water. Gravity will then pull down on the valve member 52 and force it into its second position, as shown in the left cross-sectional side view of Fig. 3. In this position the valve passage 48 is unblocked and fluid communication between the electronics compartment space 36 and the exterior 58 is facilitated. The constriction 50 of the valve housing 46 may act as a stop and support for the arrowhead of the anchor 52b to prevent gravity from pulling the valve member 52 out of the valve housing 46. When, alternatively, the appliance is being cleaned, the valve 44 may be immersed in water. Buoyancy will then force the valve member 52 upwards, overcoming gravity, and push the buoyant body 52a into sealing contact with the constriction 50; see the right cross-sectional view of Fig. 3. This substantially blocks the valve passage 48 and prevents the ingress of water from the exterior 58 into the electronics compartment space 36.

It will be appreciated that, as a result of the fact that the buoyancy force provided by water always acts upwards, the valve 44 functions best when the appliance 1 is submerged in water in its normal (up-right) use orientation. An acceptable sealing level is still obtained when the appliance 1 is submerged in an inclined orientation that departs no more than 90° degrees from the upright orientation. The valve 44 is therefore regarded suitable to prevent the ingress of water during normal washing in a relatively shallow water-filled dishpan, in which upside down submersion of the appliance is practically impossible.

In some embodiments the valve member 52 may not perfectly seal the valve passage 48 and allow for some water to seep into the electronics compartment space 36 when immersed during cleaning. Given typical cleaning times, however, this need not be a problem as long as the leak rate of the valve 44 is not too large. For practical purposes, the valve 44 may preferably be configured to have a leakage rate of no more than five grams of water per ten seconds of submersion in water, and more preferably no more than four grams of water per ten seconds of submersion. Valves with such leakage rates are economically manufacturable and provide a sound trade-off between appliance cleanability and appliance reliability/field call rate.

As mentioned, water that ingresses into the electronics compartment 34, due to cleaning or otherwise, may drain therefrom via the valve passage 48 of the valve 44. Such liquid water drainage may occur at any time that the washable part 20 is in its normal use orientation (with the valve 44 positioned at a low point of the electronics compartment 34) and the valve passage 48 is unblocked. To promote the discharge of water via the valve 44, the wall of the electronics compartment, and more particularly the bottom wall 32 defined thereby, may be arranged to direct (liquid) water towards the valve passage 48. This may, for example, be accomplished by having the wall define a sloping water collecting surface, or a plurality of water channels/grooves, that lead to a lowest point coinciding with the valve passage.

Even when a sloping water collecting surface is provided, however, it is possible that not all water that has accumulated inside the electronics compartment may be drained via the valve 44. Water may, for instance, be trapped in pockets between electronic components provided in the electronics compartment 34 and/or other places that do not properly drain into the valve passage 48. To ensure that water is also discharged from these locations, an upper wall 22 of the electronics compartment 34, disposed higher than the bottom wall 32 thereof when the appliance 1 is in its normal use orientation, may be provided with a venting passage 54 that defines at least a portion of a path from the interior electronics compartment space 36 to the exterior 58 of the electronics compartment 34. During operation of the appliance 1, the venting passage 48 may cooperate with the valve passage 48 to discharge trapped water as follows.

During operation of the appliance 1, the heater 38 generates and dissipates heat, primarily to heat the liquid contents of the inner jug 30. Part of the generated heat will dissipate into the interior 36 of the electronics compartment 36, however, and cause the temperature of the other electric components and air therein to rise. The higher temperature inside the electronics compartment 34 will in turn lead to the rapid evaporation of liquid water that has been trapped in undrainable locations. The resulting warm, moist air within the electronics compartment 34 will rise and be allowed to escape the interior 36 of the electronics compartment 34 via the venting passage 54. At the same time, relatively cold, dry air from the environment 58 of the appliance will be drawn in through the open valve passage 48 to sustain the moist-air discharging circulation.

To prevent the ingress of water into the electronics compartment 34 via the venting passage 54, in particular during cleaning of the appliance 1, the appliance 1 may include a semi-permeable seal 56 that is disposed in or adjacent the venting passage 54, in the path the latter provides from the interior 36 of the electronics compartment 34 to the exterior 58 thereof. In the depicted embodiment, the semi-permeable seal 56 is provided for in the form of an economically manufacturable and durable labyrinth seal 56. The seal 56 provides for a narrow, tortuous passage via which water cannot easily ingress into the interior 36 of the electronics compartment 34, but that does allow for the discharge of moist air from the interior 36 of the electronics compartment 34 to the exterior of the appliance 1.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

## Claims

1. An electric kitchen appliance (1) including a washable part (20) that comprises:
- at least one wall (22, 32, 30) that defines a generally sealed electronics compartment (34);
- electronics (38, 40) disposed inside said electronics compartment;
- a valve (44), including:
- a valve housing (46) that is incorporated in said at least one wall (32) and that defines a valve passage (48) from an interior (36) of the electronics compartment (34) to an exterior (58) of the electronics compartment; and
- a valve member (52) that is at least partly movably arranged inside the valve housing (46) such that it is displaceable between a first position in which the valve passage (48) is substantially closed off, and a second position in which the valve passage is substantially open,
wherein the valve member (52) is configured such that it moves into the first position through water-induced action when the valve is inserted in water, and such that it moves into the second position when the valve is removed from said water.

2. The kitchen appliance according to claim 1, wherein the washable part (20) has a normal use orientation in which it is configured to be placed onto a work surface or further appliance part (10) for operation, and wherein, in said normal use orientation, said at least one wall defines a bottom wall (32) of the electronics compartment, which bottom wall incorporates the valve (44).

3. The kitchen appliance according to claim 2, wherein the valve member (52) includes a buoyant body (52a) that is movably arranged inside the valve housing (46).

4. The kitchen appliance according to claim 3, wherein the valve (44) is configured such that the buoyant body (52), upon insertion of the valve into water, will float on said water so as to occupy its first position, and such that the buoyant body (52a), upon emergence of the valve from the water, will be forced back to its second position by gravity, at least when the appliance is held in its normal use orientation.

5. The kitchen appliance according to any of the claims 2-4, wherein said at least one wall further defines an upper wall (22) that, in said normal use orientation, is disposed higher than said bottom wall (32), and
wherein said upper wall (22) includes a venting passage (54) defining at least a portion of a path from the interior (36) of the electronics compartment to the exterior (58) of the electronics compartment.

6. The kitchen appliance according to 5, further comprising a semi-permeable seal (56) that is disposed in said path, and that prevents the exchange of liquid water and allows for the exchange of moist air between the interior (36) of the electronics compartment and the exterior (58) of the electronics compartment.

7. The kitchen appliance according to claim 6, wherein said semi-permeable seal (56) is a labyrinth seal.

8. The kitchen appliance according to any of the claims 1-7, wherein the valve (44) has a leakage rate of no more than 5 grams of water per 10 seconds of submersion in water, and preferably no more than 4 grams of water per 10 seconds of submersion.

9. The kitchen appliance according to any of the claims 1-8, wherein said appliance (1) is a liquid heating appliance, and the electronics comprise an electric heating element (38).
